Europäisches Patentamt

European Patent Office

Office européen des brevets

(19)

(11) **EP 0 883 502 B1**

(12) **FASCICULE DE BREVET EUROPEEN**

(45) Date de publication et mention
de la délivrance du brevet:
**20.10.1999 Bulletin 1999/42**

(21) Numéro de dépôt: **97902359.5**

(22) Date de dépôt: **11.02.1997**

(51) Int. Cl.⁶: **B60C 9/22**, B60C 9/20

(86) Numéro de dépôt international:
**PCT/EP97/00621**

(87) Numéro de publication internationale:
**WO 97/30857 (28.08.1997 Gazette 1997/37)**

(54) **ARMATURE DE SOMMET DE PNEUMATIQUE**

REIFEN-VERSTÄRKUNGSGÜRTEL

TYRE CROWN REINFORCEMENT

(84) Etats contractants désignés:
**DE ES FR GB IT**

(30) Priorité: **20.02.1996 FR 9602178**

(43) Date de publication de la demande:
**16.12.1998 Bulletin 1998/51**

(73) Titulaire:
**COMPAGNIE GENERALE DES
ETABLISSEMENTS
MICHELIN - MICHELIN & CIE
63040 Clermont-Ferrand Cédex (FR)**

(72) Inventeur: **COLOM, André**
**F-63400 Chamalières (FR)**

(74) Mandataire: **Devaux, Edmond-Yves
Michelin & Cie,
Service SGD/LG/PI Ladoux
63040 Clermont-Ferrand Cedex 01 (FR)**

(56) Documents cités:
**WO-A-96/20095          FR-A- 2 081 872
US-A- 4 688 615          US-A- 4 696 335**

- **PATENT ABSTRACTS OF JAPAN vol. 017, no.
389 (M-1449), 21 Juillet 1993 & JP 05 069702 A
(TOYO TIRE & RUBBER CO LTD), 23 Mars 1993,**
- **PATENT ABSTRACTS OF JAPAN vol. 012, no.
152 (M-695), 11 Mai 1988 & JP 62 273837 A
(YOKOHAMA RUBBER CO LTD:THE), 27
Novembre 1987,**

Printed by Xerox (UK) Business Services
2.16.7/3.6

## Description

L'invention concerne un pneumatique à armature de carcasse radiale ancrée dans chaque bourrelet à au moins une tringle, et comprenant une armature de sommet constituée par au moins deux nappes dites de travail, superposées et formées de fils ou câbles parallèles entre eux dans chaque nappe et croisés d'une nappe à l'autre en formant avec la direction circonférentielle du pneumatique des angles au plus égaux à 45° en valeur absolue.

Le document WO 96 /20095, publié 04.07.96 et correspondent à la demande française FR 94/15 736, concerne un pneumatique tel que décrit ci-dessus et plus particulièrement un pneumatique du type "Poids-Lourds", dont le rapport de la hauteur sur jante H sur la largeur axiale maximale S est au plus égal à 0,60. Ladite demande préconise, en vue d'améliorer l'endurance de l'armature de sommet d'un tel pneumatique, ainsi que la régularité de l'usure de sa bande de roulement, une architecture d'armature de sommet caractérisée par la présence combinée dans ladite armature d'une nappe axialement continue de câbles inextensibles faisant avec la direction circonférentielle du pneumatique un angle au moins égal à 60°, et d'une nappe, d'éléments métalliques orientés sensiblement parallèlement à la direction circonférentielle, disposée radialement entre les deux nappes de sommet de travail.

Une telle architecture a pour but d'abaisser les températures de fonctionnement régnant en bords de nappes de travail, la largeur de la nappe additionnelle de câbles circonférentiels étant moindre que les largeurs de nappes de travail.

Le brevet US 4 688 615 décrit un pneumatique selon le préambule de la revendication 1. Il s'agit d'une armature de sommet pour pneumatique radial composée d'une première nappe et d'une deuxième nappe formées de câbles parallèles entre eux dans chaque nappe, croisés d'une nappe à la suivante en faisant avec la direction circonférentielle du pneumatique un angle pouvant être compris entre 5 et 60°. Entre les deux dites nappes est placée une troisième nappe de câbles disposés circonférentiellement, lesdits câbles ayant un diamètre au plus égal au diamètre des câbles des première et deuxième nappes, et étant réalisés à partir d'un matériau ayant une résistance à la traction plus faible que la résistance à la traction du matériau formant les câbles des première et deuxième nappes, ce qui confère à ladite troisième nappe une résistance à la traction moindre, et étant plus extensible que chacune des nappes à câbles croisés, ladite troisième nappe n'étant en outre pas plus large que la nappe de câbles à angle la plus large.

L'abaissement des températures de fonctionnement, dans les pneumatiques étant aussi un souci majeur des manufacturiers de pneumatiques "Poids-Lourds" quel que soit le rapport de forme H/S, les études de la demanderesse ont conduit cette dernière à rechercher une solution tout aussi efficace qu'économique.

Le pneumatique à armature de carcasse radiale, conforme à l'invention, ayant une armature de sommet comprenant au moins deux nappes de sommet de travail en câbles inextensibles, croisés d'une nappe à l'autre, en faisant avec la direction circonférentielle des angles compris entre 10° et 45°, en l'absence de toute nappe formée de câbles inextensibles faisant avec la direction circonférentielle un angle supérieur à 45°, une nappe additionnelle, continue axialement, formée d'éléments métalliques orientés sensiblement parallèlement à la direction circonférentielle, placée radialement entre les nappes de travail, ayant une largeur axiale au moins égale à 50 % de la largeur axiale maximale $S_0$ de l'armature de carcasse, est caractérisé en ce que la largeur de la nappe additionnelle est au moins égale à 1,05 fois la largeur axiale de la nappe de sommet de travail la plus large, les câbles de ladite nappe additionnelle ayant un diamètre plus grand que celui des câbles des nappes de travail.

De manière préférentielle, la nappe additionnelle aura une largeur axiale au moins égale à 1,1 fois la largeur de la nappe de sommet de travail la plus large.

On a constaté que, non seulement la disposition énoncée et revendiquée permet un gain notable en température de fonctionnement sans nécessiter une nappe dite de triangulation, mais, en outre et de manière inattendue, qu'elle permet une élévation du coefficient de sécurité des câbles de la nappe additionnelle, le coefficient de sécurité d'un câble étant le rapport de sa force de rupture en tension sur la force de traction maximale qu'il subit en fonctionnement dans le pneumatique en roulage. A coefficient de sécurité constant, le poids et le prix de la nappe additionnelle peuvent être avantageusement diminués.

Une manière avantageuse d'utiliser la nappe additionnelle d'éléments circonférentiels, manière convenant plus particulièrement à des pneumatiques de rapport de forme H/S au moins égal à 0,70, consiste à conférer à la première nappe de sommet de travail une courbure méridienne sensiblement égale à la courbure méridienne de l'armature de carcasse sous-jacente, de façon à pouvoir la disposer parallèlement à ladite armature de carcasse sans interposition de profilés. La nappe additionnelle est alors prévue avec une courbure sensiblement nulle en étant séparée de la première nappe de travail par des profilés appropriés, de forme sensiblement triangulaire.

Il faut entendre par câble inextensible un câble, par exemple en acier, qui a un allongement relatif inférieur à 0,5 % mesuré à 25 % de sa charge de rupture.

Des éléments métalliques orientés sensiblement parallèlement à la direction circonférentielle sont des éléments qui font avec ladite direction des angles compris dans l'intervalle + 2,5°, - 2,5° autour de 0°.

Les éléments de renforcement de la nappe additionnelle peuvent être des câbles métalliques inextensibles conférant à ladite nappe une rigidité d'extension sous effort de traction très élevée dès les faibles allongements.

La rigidité linéique d'extension de la nappe additionnelle peut être comprise entre 0,3 et 1,3 fois la rigidité linéique d'une nappe de travail de l'armature de sommet.

La rigidité linéique d'extension d'une nappe d'éléments de renforcement résulte de la force de traction, exercée selon la direction desdits éléments par unité de largeur de nappe, nécessaire pour obtenir un allongement relatif donné $\varepsilon$, et peut s'exprimer par la formule $R = dF/d\varepsilon$, R étant la rigidité de la nappe considérée, $dF/d\varepsilon$ la dérivée de la force de traction par unité de largeur de la nappe par rapport à l'allongement relatif, et $\varepsilon$ étant égal à 0,5 %, ou par la formule

$$R = \frac{1}{p}\frac{dF}{d\varepsilon},$$

p étant le pas entre les éléments de ladite nappe et $dF/d\varepsilon$ la dérivée de la force de traction par élément par rapport à l'allongement relatif.

Dans le cadre ci-dessus, la nappe additionnelle peut être formée de câbles en acier continus dits semi-élastiques, c'est-à-dire des câbles présentant des allongements relatifs à la rupture compris entre 2 % et 6 %. Ces câbles permettent d'obtenir le niveau de rigidité apte à une répartition harmonieuse de la tension circonférentielle entre les nappes de sommet de travail et la nappe additionnelle. Lesdits câbles sont avantageusement dits bi-module, c'est-à-dire présentant une courbe, contrainte de traction en fonction de l'allongement relatif, ayant des faibles pentes pour les faibles allongements et une pente sensiblement constante et forte pour les allongements supérieurs. Le module avant cuisson très faible, pour des allongements inférieurs à 2 %, permet une augmentation du développement circonférentiel de la nappe additionnelle pendant la cuisson du pneumatique.

La nappe additionnelle peut aussi être formée de câbles métalliques en acier orientés circonférentiellement et coupés de manière à former des tronçons de longueur très inférieure à la longueur circonférentielle de la nappe, les coupures entre tronçons étant circonférentiellement décalées les unes par rapport aux autres . Un tel mode de réalisation permet de conférer, de manière simple, à la nappe additionnelle la rigidité désirée, inférieure à la rigidité d'une nappe réalisée avec les mêmes câbles non fractionnés.

L'armature de sommet, conforme à l'invention, sera avantageusement complétée par une nappe de sommet dite de protection, formée de câbles métalliques élastiques en acier orientés par rapport à la direction circonférentielle avec un angle sensiblement égal à l'angle formé par les câbles de la nappe de sommet de travail radialement la plus à l'extérieur, et dont la largeur axiale est au moins égale à la largeur axiale de la nappe de travail située radialement le plus à l'extérieur.

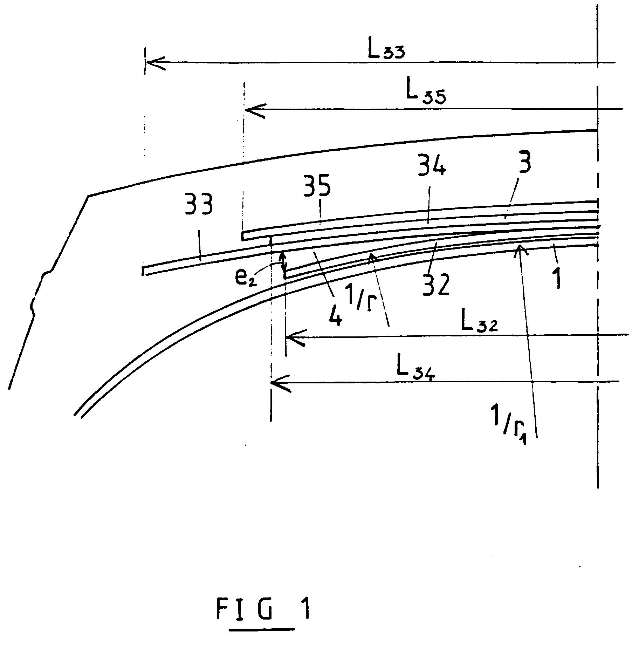

Les caractéristiques et avantages de l'invention seront mieux compris à l'aide de la description qui suit et qui se réfère au dessin, illustrant à titre non limitatif un exemple d'exécution, et sur lequel la figure unique 1 représente schématiquement, vue en section méridienne, une armature de sommet conforme à l'invention.

Le pneumatique P, de dimension 315 / 80 R 22.5 X, a un rapport de forme H/S égal à 0,8, H étant la hauteur du pneumatique P sur sa jante de montage et S sa largeur axiale maximale. Ledit pneumatique P comprend une armature de carcasse radiale (1) ancrée dans chaque bourrelet à au moins une tringle en formant un retournement, et formée d'une seule nappe de câbles métalliques. Cette armature de carcasse (1) est frettée par une armature de sommet (3), formée radialement de l'intérieur à l'extérieur :

- d'une première nappe de sommet travail (32) formée de câbles métalliques inextensibles en acier, orientés d'un angle $\alpha$, égal dans le cas montré à 22°, radialement adjacente et parallèle à l'armature de carcasse (1), sa courbure méridienne $1/r$ étant sensiblement égale à la courbure méridienne $1/r_1$ de l'armature de carcasse (1) sous-jacente, les câbles respectivement de la nappe de carcasse et de la nappe de travail étant séparés par une épaisseur constante de mélange caoutchouteux,

- surmontant la première nappe de sommet de travail (32), d'une nappe additionnelle (33) formée d'éléments métalliques en acier inextensibles de longueur circonférentielle sensiblement égale à 1/6 de la longueur circonférentielle de la nappe (33), lesdits éléments étant orientés à 0°, les bords axialement extérieurs de la première nappe de sommet de travail étant séparés de la nappe additionnelle (33) d'éléments circonférentiels par des profilés (4) de section transversale sensiblement triangulaire, l'épaisseur $e_2$ de caoutchouc entre la nappe (32) et la nappe (33), mesurée au niveau de l'extrémité axialement extérieure de la nappe (32) et égale sensiblement à 2 mm,

- puis d'une deuxième nappe de sommet de travail (34) formée de câbles métalliques identiques à ceux de la première nappe (32), et faisant avec la direction circonférentielle un angle $\beta$, opposé à l'angle $\alpha$ et, dans le cas montré, égal audit angle $\alpha$ de 22°, (mais pouvant être différent dudit angle $\alpha$),

- et enfin d'une dernière nappe (35) de câbles métalliques en acier dits élastiques, orientés par rapport à la direction circonférentielle d'un angle $\theta$ de même sens que l'angle $\beta$ et égal audit angle $\beta$,

(mais pouvant être différent), cette dernière nappe étant une nappe dite de protection, et des câbles dits élastiques étant des câbles ayant à la rupture un allongement relatif au moins égal à 4 %.

La largeur axiale $L_{32}$ de la première nappe de travail (32) est égale à 0,50 fois la largeur axiale maximale $S_0$ de la fibre moyenne de l'armature de carcasse (1), soit 160 mm, ce qui est, pour un pneumatique de forme usuelle très inférieur à la largeur de la bande de roulement, qui est égale, dans le cas étudié, à 235 mm. La largeur axiale $L_{34}$ de la deuxième nappe de travail (34) est égale à la largeur $L_{32}$. La largeur axiale $L_{33}$ de la nappe additionnelle (33) est égale à 190 mm, ce qui représente 0,6 $S_0$. En fait, la largeur $L_{33}$ de la nappe additionnelle (33) est très supérieure à la largeur $L_{32}$ ($L_{34}$) de la nappe de travail la plus large. La dernière nappe de sommet (35), dite de protection, a une largeur $L_{35}$ très légèrement supérieure à la largeur $L_{34}$ des nappes de sommet de travail, soit 165 mm. La rigidité linéique d'extension de la nappe de travail (32), ou de la nappe de travail (34), identique dans le cas présent, puisque formée des mêmes câbles métalliques en acier 9.28 non frettés, inextensibles et continus sur toute la largeur de la nappe, lesdits câbles étant disposés avec le même pas, c'est-à-dire avec le même espace entre câbles (mesuré perpendiculairement auxdits câbles), est préférentiellement supérieure à 4000 daN/mm à 0,5 % d'allongement relatif, et dans le cas étudié égale à 5500 daN/mm. Quant à la nappe additionnelle (33), sa rigidité d'extension pour un allongement relatif de 0,5 % est égale à 0,91 fois celle d'une nappe de sommet de travail et dans le cas étudié, la nappe (33) est formée de câbles métalliques en acier 27.23 non frettés, et coupés de sorte a avoir des tronçons de câbles dont la longueur circonférentielle est égale à 17 % de la longueur circonférentielle de la nappe, ce qui lui confère une rigidité d'extension pour un allongement relatif de 0,5 % égale à 5000 daN/mm.

La nappe additionnelle (33) peut aussi être formée de câbles dits "bi-module". Une certaine élasticité de la nappe (33) n'étant utile que lors de la conformation du pneumatique dans le moule de vulcanisation, un câble présentant un faible module tangent d'extension, par exemple au plus égal à 1000 daN/mm$^2$ , de l'origine à 1 % d'allongement relatif et un module de même nature, par exemple supérieur à 8000 daN/mm$^2$, pour un allongement relatif supérieur à 2 %, peut être utilisé.

Le pneumatique, décrit ci-dessus selon la deuxième variante, a été testé sous 4000 kg de charge pour une pression de gonflage de 8,5 bars et à une vitesse de 100 km/h. Les mesures de température en extrémités de nappes de sommet de travail mettent en évidence un gain, en température de fonctionnement, pouvant atteindre 25°, ce qui est inattendu, étant donné les températures élevées atteintes dans ces régions supérieures à 100°.

**Revendications**

1. Pneumatique à armature de carcasse radiale (1), ayant une armature de sommet (3) comprenant au moins deux nappes de sommet de travail (32, 34) en câbles inextensibles, croisés d'une nappe à la suivante en faisant avec la direction circonférentielle des angles compris entre 10° et 45°, et en l'absence de toute nappe formée de câbles inextensibles faisant avec la direction circonférentielle un angle supérieur à 45°, une nappe additionnelle (33), continue axialement, formée d'éléments métalliques orientés sensiblement parallèlement à la direction circonférentielle, placée radialement entre les nappes de travail (32, 34), ayant une largeur axiale $L_{33}$ au moins égale à 50 % de la largeur axiale maximale $S_0$ de l'armature de carcasse (1), caractérisé en ce que la largeur $L_{33}$ de la nappe additionnelle (33) est au moins égale à 1,05 fois la largeur axiale de la nappe de sommet de travail $L_{32}$, $L_{34}$ la plus large, les câbles de ladite nappe additionnelle (33) ayant un diamètre plus grand que celui des câbles des nappes de travail (32, 34).

2. Pneumatique selon la revendication 1, caractérisé en ce que la largeur $L_{33}$ de la nappe additionnelle (33) est au moins égale à 1,1 fois la largeur axiale de la nappe de sommet de travail la plus large.

3. Pneumatique selon la revendication 1, caractérisé en ce que la première nappe de sommet de travail (32) a une courbure méridienne 1/r sensiblement égale à la courbure méridienne $1/r_1$ de l'armature de carcasse (1) sous-jacente, de façon à ce qu'elle soit disposée parallèlement à ladite armature de carcasse (1), des profilés (3) étant interposés entre les bords de la nappe de travail (32) et la nappe additionnelle (33), dont la courbure est sensiblement nulle.

4. Pneumatique selon l'une des revendications 1 à 3, caractérisé en ce que l'armature de sommet (3) comprend en outre une nappe continue (35), dite de protection, radialement située au dessus de la dernière nappe de travail (34), formée de câbles métalliques élastiques, et dont la largeur axiale $L_{35}$ est au moins égale à la largeur axiale $L_{34}$ de la nappe de travail radialement la plus à l'extérieur.

5. Pneumatique selon l'une des revendications 1 à 4, caractérisé en ce que la nappe additionnelle (33) est formée de câbles métalliques inextensibles en acier, coupés de manière à former des tronçons de longueur très inférieure à la circonférence de la nappe, les coupures entre tronçons étant axialement décalées les unes par rapport aux autres.

6. Pneumatique selon l'une des revendications 1 à 4, caractérisé en ce que la nappe additionnelle (33) est formée de câbles métalliques en acier continus présentant, avant cuisson, une courbe représentative de la contrainte de traction en fonction de l'allongement relatif ayant des faibles pentes pour les faibles allongements et une pente sensiblement constante et forte pour les allongements supérieurs.

## Claims

1. A tyre with a radial carcass reinforcement (1), having a crown reinforcement (3) comprising at least two working crown plies (32, 34) of inextensible cables, crossed from one ply to the next, forming angles of between 10° and 45° with the circumferential direction, and in the absence of any ply formed of inextensible cables forming an angle greater than 45° with the circumferential direction, an additional, axially continuous, ply (33) formed of metallic elements oriented substantially parallel to the circumferential direction, placed radially between the working plies (32, 34), having an axial width $L_{33}$ of at least 50% of the maximum axial width $S_0$ of the carcass reinforcement (1), characterized in that the width $L_{33}$ of the additional ply (33) is at least equal to 1.05 times the axial width of the widest working crown ply $L_{32}$, $L_{34}$, the cables of said additional ply (33) having a larger diameter than that of the cables of the working plies (32, 34).

2. A tyre according to Claim 1, characterized in that the width $L_{33}$ of the additional ply (33) is at least equal to 1.1 times the axial width of the widest working crown ply.

3. A tyre according to Claim 1, characterized in that the first working crown ply (32) has a meridian curvature 1/r substantially equal to the meridian curvature $1/r_1$ of the subjacent carcass reinforcement (1), so that it is arranged parallel to said carcass reinforcement (1), profiled members (3) being interposed between the edges of the working ply (32) and the additional ply (33), the curvature of which is substantially zero.

4. A tyre according to one of Claims 1 to 3, characterized in that the crown reinforcement (3) furthermore comprises a continuous so-called protective ply (35) radially located above the last working ply (34), formed of elastic metal cables, and the axial width $L_{35}$ of which is at least equal to the axial width $L_{34}$ of the radially outermost working ply.

5. A tyre according to one of Claims 1 to 4, characterized in that the additional ply (33) is formed of inextensible metal cables made of steel, cut so as to form sections of a length very much less than the circumference of the ply, the cuts between sections being axially offset relative to each other.

6. A tyre according to one of Claims 1 to 4, characterized in that the additional ply (33) is formed of continuous metal cables made of steel, having, before curing, a curve representing the tensile stress as a function of the relative elongation having gradual slopes for the low elongations and a substantially constant, steep slope for the higher elongations.

## Patentansprüche

1. Luftreifen mit radialer Karkassenbewehrung (1), der eine Scheitelbewehrung (3) aufweist, die mindestens zwei Scheitel-Arbeitslagen (32, 34) aus undehnbaren Seilen aufweist, die von einer Lage zur folgenden dadurch über Kreuz laufen, daß sie mit der Umfangsrichtung Winkel bilden, die zwischen 10° und 45° verlaufen, und in Abwesenheit jeder Lage, die aus undehnbaren Seilen gebildet ist, die mit der Umfangsrichtung einen Winkel von mehr als 45° bilden, eine zusätzliche Lage (33), die axial durchgehend ist, aus Metallelementen gebildet ist, die im wesentlichen parallel zur Umfangsrichtung ausgerichtet sind, radial zwischen den Arbeitslagen (32, 34) eingesetzt ist, und eine axiale Breite $L_{33}$ hat, die mindestens 50% der maximalen axialen Breite $S_0$ der Karkassenbewehrung (1) beträgt, dadurch gekennzeichnet, daß die Breite $L_{33}$ der zusätzlichen Lage (33) mindestens gleich dem 1,05-fachen der axialen Breite der breitesten Scheitel-Arbeitslage $L_{32}$, $L_{34}$ ist, wobei die Seile der genannten zusätzlichen Lage (33) einen Durchmesser haben, der größer ist als der der Seile der Arbeitslagen (32, 34).

2. Luftreifen nach Anspruch 1, dadurch gekennzeichnet, daß die Breite $L_{33}$ der zusätzlichen Lage (33) mindestens gleich ist dem 1,1-fachen der axialen Breite der größeren Scheitel-Arbeitslage.

3. Luftreifen nach Anspruch 1, dadurch gekennzeichnet, daß die erste Scheitel-Arbeitslage (32) eine Meridiankrümmung 1/r aufweist, die im wesentlichen gleich ist der Meridian-krümmung $1/r_1$ der darunter benachbarten Karkassenbewehrung (1), und zwar derart, daß sie parallel zur genannten Karkassenbewehrung (1) angeordnet sein soll, wobei Profile (3) zwischen den Rändern der Arbeitslage (32) und der zusätzlichen Lage (33) angeordnet sind, deren Krümmung im wesentlichen null ist.

4. Luftreifen nach einem der Ansprüche 1 bis 3, dadurch gekennzeichnet, daß die Scheitelbewehrung (33) außerdem eine durchgehende, sog. Schutzlage (35) aufweist, die radial über der letzten Arbeitslage (34) gelegen ist und aus elastischen Metallseilen gebildet ist, und daß deren axiale Breite $L_{35}$ mindestens gleich ist der axialen Breite $L_{34}$ der radial am weitesten außen liegenden Arbeitslage.

5. Luftreifen nach einem der Ansprüche 1 bis 4, dadurch gekennzeichnet, daß die zusätzliche Lage (33) aus undehnbaren Stahl-Metallseilen gebildet ist, die derart zugeschnitten sind, daß sie Stücke mit Längen bilden, die viel kleiner sind als der Umfang der Lage, wobei die Schnittstellen zwischen den Stücken axial zueinander versetzt sind.

6. Luftreifen nach einem der Ansprüche 1 bis 4, dadurch gekennzeichnet, daß die zusätzliche Lage (33) aus durchgehenden Stahl-Metallseilen gebildet ist, die vor dem Vulkanisieren eine Kurve darbieten, die reprasentativ für die Zugspannung in Funktion der relativen Längsdehnung ist, mit geringen Steigungen für geringe Dehnungen und einer im wesentlichen konstanten und starken Steigung für größere Dehnungen.

FIG 1